# EUROPEAN PATENT SPECIFICATION

(11) **EP 2 081 327 B1**
(45) Date of publication and mention of the grant of the patent: **25.07.2012**
(21) Application number: 08000865.9
(22) Date of filing: 17.01.2008
(51) Int. Cl.: H04W 12/06, H04L 29/06, H04L 12/56, H04L 12/28

(54) **Assignment of a service flow identifier to a host behind a gateway MS**
Zuweisung eines Dienstflussidentifikators zu einem Host hinter einem Gateway-MS
Attribution d'un identificateur de flux de service vers un hôte derrière une passerelle MS

(43) Date of publication of application: 22.07.2009
(73) Proprietor: Nokia Siemens Networks Oy, 02610 Espoo (FI)
(72) Inventor: Premec, Domagoj, 10010 Zagreb (HR); Wisenöcker, Richard, 1140 Wien (AT)
(74) Representative: Bruglachner, Thomas E.

(56) References cited:
- EP-A- 1 848 173
- US-A1- 2007 070 935
- US-A1- 2007 211 726
- IEEE STANDARD FOR LOCAL AND METROPOLITAN AREA NETWORKS, [Online] 2006, pages 1-10, XP002499682 Retrieved from the Internet: URL:http://standards.ieee.org/getieee802/d ownload/802.16e-2005.pdf> [retrieved on 2008-10-09]
- WIMAX FORUM NETWORK ARCHITECTURE STAGE 3 RELEASE 1, VERSION 1.2, [Online] 11 January 2008 (2008-01-11), XP002499683 Retrieved from the Internet: URL:http://www.wimaxforum.org/documents/do cuments/> [retrieved on 2008-10-09]
- ANONYMOUS: 'Stage 2 Multiple Hosts High-Level System Architecture Descriptions' 060102_NWG_NORTEL_MULTIPLEHOSTS_STAGE2.DOC, 02 January 2006, page 1, XP007920171

## Description

### Technical field of the invention

The invention relates to network entities, a method and a computer program product.

### Background of the invention

WiMAX, the Worldwide Interoperability for Microwave Access, is a telecommunications technology aimed at providing wireless data over long distances in a variety of ways, from point-to-point links to full mobile cellular type access. It is originally based on the IEEE 802.16 standard, which is also called WirelessMAN. The name WiMAX was created by the WiMAX Forum (www.wimaxforum.org), which was formed in June 2001 to promote conformance and interoperability of the standard. WiMAX is a standards-based technology enabling the delivery of last mile wireless broadband access.

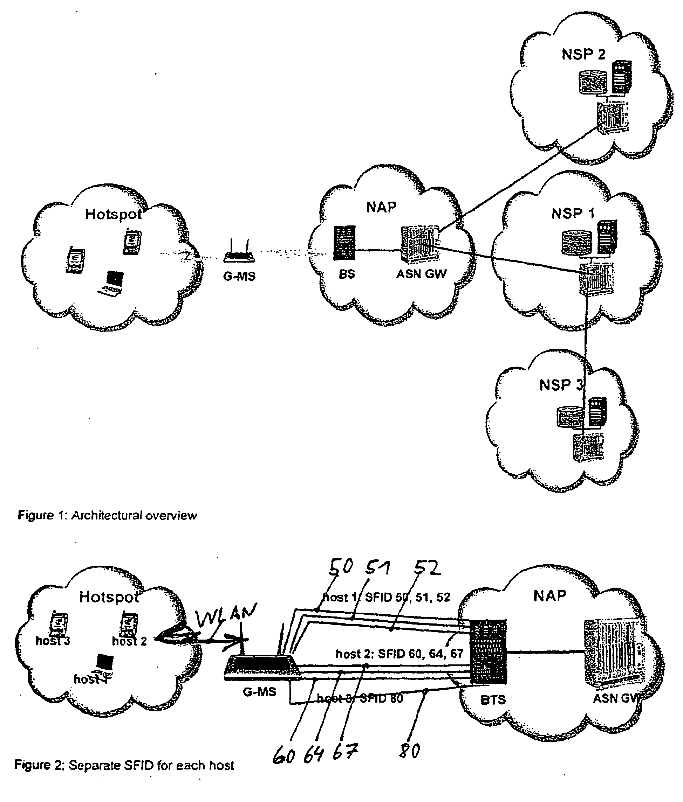

Multiple hosts is a feature on the WiMAX NWG Rel. 1.5 feature list. In the multiple host scenario there is a WiMAX station (G-MS) which is equipped with additional network interface. This additional interface could be 802.11 or 802.3 (i.e. G-MS is also acting as 802.11 access point or 802.3 switch/bridge), or any other technology. Computers (or hosts, called G-hosts in the context of the multiple host feature) can attach to this additional G-MS interface, and the G-MS will use its WiMAX connection to backhaul the G-hosts' traffic. Important is also that each of the G-hosts has a WiMAX subscription. Figure 1 illustrates the basic architecture.

Each of the G-hosts in the hotspot in Figure 1 is attached to the WiMAX network through a WiMAX station G-MS. Each G-host has a WiMAX subscription and is separately authenticated to the network with its WiMAX subscription.

A MS can have multiple service flows established with the access network. Service flows are used as connections over which the user plane traffic is transported. Each service flow is assigned with a unique identifier, SFID, as defined in IEEE 802.16-2004. Each of these service flows can have a different set of QoS properties (bandwidth, delay, priority, scheduling...). When attached to a particular base station, each service flow is mapped to a single radio connection which is called transport CID, and is uniquely identified by the CID number.

A G-MS will establish a separate service flow for each G-host, so that the traffic from different G-hosts is not mixed on the same radio connection. Such separation of G-hosts traffic into different G-MS's SFIDs has the advantage that the traffic from one G-host does not have any impact on the traffic of other G-hosts (i.e. like reduced bandwidth, increased delay, packet loss, etc.). If a G-host needs different services simultaneously, like VoIP and web browsing and interactive service, the G-MS may establish several different service flows, with corresponding QoS properties, and associate them with a single G-host. Each of the service flows would then be used to transport a part of the G-host traffic requiring a particular QoS treatment. This concept is illustrated in Figure 2.

The problem is that the signalling interface between the G-MS and the base station (defined in IEEE 802.16-2004 and IEEE 802.16e-2005 standards) does not allow to mark a particular SFID for usage by a particular G-host. So the question is how the G-MS could relate the different SFIDs to individual G-hosts.

A solution proposed in the contribution to WiMAX Forum [3] is based on the usage of Ethernet convergence sublayer (Eth CS). As per 802.16-2004 each SFID is associated with a particular convergence sublayer and an associated set of classifiers. A classifier is a filter that is applied to the user plane packets and if the packet matches the filter rule, then that packet is transported over an associated SFID. In case of Eth CS the IEEE 802.3 MAC address is part of the classifier rule. Since the 802.3 MAC address is supposed to be world-wide unique and each G-host will have one (on its 802.11 interface), it can be used to identify different G-hosts. The MAC address of a G-host can be put into the classifier of a G-MS service flow, and this would enable the G-MS to map user plane packets of G-hosts to the correct SFID. The disadvantage of this approach is that it requires the usage of Eth CS. Mobile WiMAX systems will typically use IP CS and not Eth CS. Eth CS causes additional overhead over the wireless link since the Ethernet header is transported over the radio link, and since the wireless link is a scarce resource, this overhead should be avoided if possible.

Another alternative, as suggested in [6] (footnote 1 on page 26) is to misuse an existing IEEE 802.16-2004 parameter Service Class Name. While this will work with both Eth CS and IP CS, it is a deviation from the intended usage as described in the IEEE 802.16-2004 specification. Further, it is not backwards compatible with existing MS implementations.

Both existing proposals address the problem only in the context of pre- provisioned service flows, but provide no means for matching dynamically established service flows to a particular G-host.

### Summary of the invention

Therefore, it is an object of the present invention to overcome these shortcomings of the prior art.

This is accomplished by what is set forth in the appended independent claims, while the appended dependent claims define advantageous modifications thereof.

Such solution can have the following advantages:
1. allowing re-use of existing RADIUS messages for transporting additional information needed by G-MS in a secure way,
2. letting the G-MS know which service flow to use for which G-host,
3. in case there are several SFIDs associated with the same G-host, the G-MS has enough information as to which SFID to use for which type of G-host's traffic,
4. being independent of the 802.16 convergence sublayer, works with any type of CS,
5. it is based solely on the IP layer, does not require any changes to Std IEEE 802.16-2004 and Std IEEE 802.16e-2005.
   (The same functionality could be achieved by modifying the 802.16 signalling messages, but NSN position is that a solution based on the IP layer signalling is preferred and any changes to the 802.16 layer should be avoided.)

Specifically, according to a first aspect of the present invention, there is provided an
access serving network entity comprising
- a message generating unit for generating a message, the message comprising an identification of a host device and an identification of at least one flow to be transmitted between a transceiver device and the host device via a wireless network,
- a sender for sending the message to the transceiver device.

The wireless network may preferably be a WLAN network or WiMax network.
Between host device and "transceiver devicee.g. WLAN or LAN (Ethernet) can be used. Between transceiver decice and access serving network e.g. WiMAX or wired LAN (Ethernet) can be used.

The traffic, transmitted in a flow or in flows between the transceiver device and the host device via a wireless network, is preferably further transmitted between the transceiver device and a network entity of a telecommunication network, preferably using the identification of the flow or flows and/ or an identification of the host device.

The message preferably comprises a set of identifications of respectively one flow for the same host device.

The message preferably comprises a PDFID, SDFID, Packet Flow Descriptor and QoS descriptor of a flow.

The message preferably is a CoA-Request message or a Radius Access-Accept message.

At least one flow preferably is a pre-provisioned service flow or a dynamically established service flow.

According to a second aspect of the present invention, there is provided a transceiver device, the transceiver device comprising a receiver for receiving a message from an access serving network entity, the message comprising an identification of a host device and at least one identification of a flow identifying traffic to be transmitted between the transceiver device and the host device via a wireless network,
the transceiver device further comprising a memory for storing an identification of a host device and at least one identification of a service flow identifier identifying traffic exchanged with the host device,
the transceiver device further comprising a transmitting unit for transmitting, via a wireless network, traffic in a flow between the transceiver device and the host device,
the transceiver device further comprising a transmitting unit for transmitting traffic in a flow between the transceiver device and a transmitting device, using the service flow identifier to identify the flow.

The transceiver device is preferably constructed to only use a service flow identifier for transport of traffic of the host device named in the same access serving network entity message as the service flow identifier.

A telecommunication system according to a fourth aspect of the present invention comprises an access serving network entity, a transceiver device and at least one mobile host.

According to a fifth aspect of the present invention, there is provided a method for assigning a flow identifier identifying a flow to be transmitted between a transceiver device and a host device via a wireless network, comprising: generating a message, the message comprising an identification of a host device and at least one identification of a flow identifying traffic to be transmitted between the transceiver device and the host device via a wireless network,
sending the message to the transceiver device.

According to a sixth aspect of the present invention, there is provided a computer program product comprising code means adapted to produce the steps of any one of the described method when loaded into the memory of a computer.

Other aspects, features and advantages of the present invention will become more fully apparent from the following detailed description of preferred embodiments thereof which is to be taken in conjunction with the appended drawings, in which:
Figure 1 depicts an architectural overview over an embodiment of the invention,
Figure 2 shows that separate SFIDs are used for each host and service flow,
Figure 3 depicts an overview of relevant functional entities of the invention and
Figure 4 depicts exemplarily elements of the invention.

Figure 1 (which was already discussed above) shows a hotspot area with three hosts devices that are communicating via a Wimax base station BS of and a Wimax access serving network gateway ASN GW of a Wireless Access Network Provider NAP with entities of Wimax service providers NSP1, NSP 2, NSP 3.

Figure 2 also shows the hotspot area of Fig. 1 with three host devices host 1, host 2, host 3 that are communicating via a Wimax mobile station G-MS, a base station BS and a Wimax access serving network gateway ASN GW of a Wireless Access Network Provider NAP with entities of Wimax service providers.

In Figure 2, the schematically shown traffic flows (service flows) 50, 51, 52, 60, 64, 67, 80 are respectively identified by service flows identifiers SFIDs 50, 51, 52, 60, 64, 67, 80.

Flow identifiers SFIDs 50, 51, 52 identify traffic flows 50, 51, 52 transmitted between the transceiver device G-MS and the host device host 1 via a wireless network.
Flow identifiers SFIDs 60, 64, 67 identify traffic flows 60, 64, 67 transmitted between the transceiver device G-MS and the host device host 2 via a wireless network.
Flow identifiers SFID 80 identifes traffic flow 80 transmitted between the transceiver device G-MS and the host device host 3 via a wireless network.

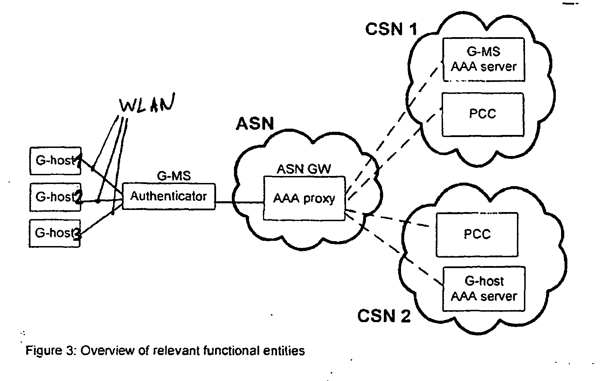

Figure 3 shows three host devices G-host 1, G-host 2, G-host 3 (shown also in Figs. 1, 2), a Wimax mobile station G-MS (comprising an authenticator), a Wimax access serving network gateway ASN GW (comprising a AAA proxy) in an ASN, a Wimax Connectivity Serving Network CSN1 (with a Gateway Mobile Station Authentication, Autorization and Accounting server = G-MS AAA and a Policy and Charging Control = PCC), and a Wimax Connectivity Serving Network CSN2 (with a G-host Authentication, Autorization and Accounting server = G-host AAA server and a Policy and Charging Control = PCC).

In principle the invention can comprise to inform the G-MS of the SFIDs to be used for the G-hosts traffic in the RADIUS Access-Accept message or in the CoA-Request message or similar AAA messages with the same purpose (like in case of Diameter based AAA)
This solution is applicable for both preprovisioned and dynamically established service flows. The architectural overview containing the relevant functional entities is shown in Fig. 3.

The subscriber authentication in WiMAX is based on EAP. The same EAP method and credentials are also used when the WiMAX subscriber attaches as a G-host through G-MS. During the authentication of a G-host, the G-MS acts as an EAP authenticator for the G-Host. G-MS also contains a RADIUS client which communicates with AAA proxy in the ASN during the authentication of a G-host. Upon successful authentication of a G-host, the AAA proxy will relay the Access-Accept message from the H-AAA server indicating successful authentication to the G-MS. By that time, also the G-host's QoS profile (associated with its WiMAX subscription) is known by the ASN. This means that the description of the preprovisioned service flows that must be created to support the G-host's QoS profile is known by the ASN at that time.

Upon successful authentication of a G-host the ASN shall allocate the SFIDs for the G-host's preprovisioned service flows and send those SFIDs to the G-MS in the Access-Accept message. When the AAA proxy in the ASN relays the Access-Accept message to the G-MS, it will add a set of service flow IDs to the relayed message. The service flow IDs attribute shall be defined as WiMAX specific RADIUS VSA. Since Access-Accept message already contains identification of a G-host, the SFIDs included in the Access-Accept message are automatically associated with this particular G-host. The G-MS should use the service flows indicated in the Access-Accept message only for transport of a traffic belonging to a G-host which is authenticated by this Access-Accept message. In addition, the SFIDs in the Access-Accept message should be accompanied by the PDFID, SDFID, Packet-Flow Descriptor and QoS Descriptor as defined in [2] section 5.4.2.26, 5.4.2.27, 5.4.2.28 and 5.4.2.29). These attributes are sent by the H-AAA server. They contain filter rules and QoS descriptors that will enable G-MS to map a particular G-host's packet to appropriate SFID.

Dynamic service flows can be established any time after the MS attached to the network and can be initiated both by the network side and by the MS. A different mechanism is needed for handling of dynamic service flows.

In case of network initiated dynamic service flow establishment, request for establishing a dynamic service flow may come from different entities like AAA server in the home network, PCC framework, ASN GW itself, etc. In any case, such request will come to the ASN GW. When ASN GW is triggered to dynamically establish a service flow for a G-host, it shall send the RADIUS CoA-Request (Change-of-Authorization-Request) message to the G-MS. The RADIUS CoA-Request message shall contain the G-host's NAI, allocated SFID, PDFID, SDFID, Packet-Flow Descriptor and QoS Descriptor [6]. These are the same fields as described for the Access-Accept message in the case of pre-provisioned service flows. The G-MS acknowledges the CoA-Request message by sending the CoA-ACK message. The network then initiates the establishment of the service flow with the G-MS at the 802.16 level. The G-MS matches the SFID of the newly established service flow with the SFID received in the CoA-Request message and is thus able to identify the G-hosts for which this service flow is established. In an error case the G-MS shall respond with the CoA-NAK message.

In case that a request for service flow establishment comes from a terminal side, the G-MS shall send an Access-Request message to the AAA proxy in the ASN. The message shall contain the NAI of the G-host. Packet-Flow descriptor(s) and QoS Descriptor(s) [6] describing the properties of the requested service flow(s). The ASN GW may further seek authorization for service flow establishment from entities such as home AAA server, PCC framework, etc. If the network authorizes the establishment of the requested service flow(s), the ASN GW shall allocate SFID(s) and respond with Access-Accept message containing the G-host's NAI, allocated SFID(s), PDFID and SDFID. If authorized Packet-Flow descriptor(s) and QoS Descriptor(s) are different from the requested, the network shall include them also in the Access-Accept message. When the 802.16 service flow is established between the G-MS and the network, the G-MS shall use the SFID from the Access-Accept message to match the established service flow with the right G-host. If the network rejects the request for establishment of a new service flow, it shall respond with Access-Reject message.

G-host could be a subscriber with or without WiMAX specific subscription data. So, the G-Host may be connected to a WiMAX network which might not be recognized by the G-Host.

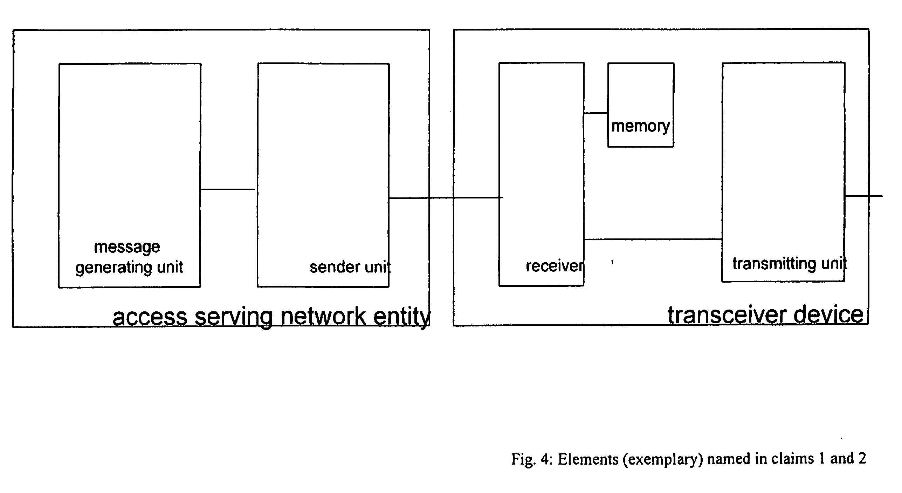

Figure 4 exemplarily depicts elements of the invention as defined in the claims.

What has been described above is what is presently considered to be preferred embodiments of the present invention. However, as is apparent to the skilled reader, these are provided for illustrative purposes only and are in no way intended to that the present invention is restricted thereto. Rather, it is the intention that all variations and modifications be included which fall within the scope of the appended claims.

### List of abbreviations

- AAA: Authentication, Authorization and Accounting
- ASN: WiMAX Access Serving Network
- BS: WIMAX Base Station
- CID: Connection ID
- CS: Convergence Sublayer
- CSN: WIMAX Connectivity Serving Network
- DHCP: Dynamic Host Configuration Protocol
- EAP: Extensible Authentication Method
- FQDN: Fully Qualified Domain Name
- G-host: end user device connected to the network via G-MS
- G-MS: Gateway MS
- H-AAA: Home AAA server
(located in the home network of the WiMAX subscriber)
- HA: Home agent
- Host: same as G-host
- IANA: Internet Assigned Numbers Authority
- IMS: WiMAX Mobile Station
- MIP: Mobile IP
- NAI: Network Access Identifier
- NAP: WiMAX Access Network Provider (operator of an ASN)
- NSP: WiMAX Network Service Provider (operator of a CSN)
- PCC: Policy and Charging Control
- QoS: Quality of Service
- SFID: Service Flow Identifier
- V-AAA: visited AAA server (located in the visited network)
- VSA: Vendor Specific Attribute

### References

[1] WiMAX NWG Stage 2, "WiMAX End-to-End Network System Architecture",
   http://www.wimaxforum.org/technology/documents/WiMAX_End-to-End_Network_Systems_Architecture_Stage_2-3_Release_1.1.0.zip
[2] WiMAX NWG Stage 3, "WiMAX End-to-End Network System Architecture",
   http://www.wimaxforum.org/technology/documents/WiMAX_End-to-End_Network_Systems_Architecture_Stage_2-3_Release_1.1.0.zip
[3] Contribution to WiMAX Forum, "Multiple Hosts behind MS", Siemens, Dez 2005,
   file:051213_NWG_Siemens_multiple_hosts_r1.doc
[4] RFC2865 - Remote Authentication Dial In User Service (RADIUS), C. Rigney, et al., June 2000, Standards Track
   http://rfc.net/rfc2865.html
[5] RFC3579 - RADIUS (Remote Authentication Dial In User Service) Support For Extensible Authentication Protocol (EAP), B. Aboba, Microsoft, P. Calhoun, Airespace, September 2003
   http://rfc.net/rfc3579.html
[6] Contribution to WiMAX Forum, "Stage 2 Text: Multiple Hosts Support", Nortel, Dez 2005, file:
   060102_NWG_Nortel_Multiple_Hosts_Stage2[1].dl.doc

## Claims

1. Transceiver device (Fig. 3: G-MS),
- the transceiver device (Fig. 3: G-MS) comprising a receiver for upon successful authentication of a host device (G_host 1), receiving a message from an access serving network entity (Fig. 3: ASN-GW, AAAproxy) via a wireless network (WiMAX),
the message comprising an identification of the host device (Fig. 3: G_host 1) and at least one identification of a flow (SFID 50, 51, 52, 60, 64, 67, 80) identifying traffic to be transmitted between the transceiver device (Fig. 3: G-MS) and the host device (Fig. 3: G_host 1-3) via a wired or wireless network (Ethernet or WLAN),
- the transceiver device (Fig. 3: G-MS) further comprising a memory for storing an identification of a host device (Fig. 3: G_host 1) and at least one identification of a service flow identifier (SFID 50, 51, 52, 60, 64, 67, 80) identifying traffic to be exchanged with the host device (Fig. 3: G_host 1),
- the transceiver device (Fig. 3: G-MS) further comprising a transmitting unit for transmitting, via a wired or wireless network (Ethernet or WLAN), traffic in a flow between the transceiver device (Fig. 3: G-MS) and the host device (Fig. 3: G_host 1),
- the transceiver device (Fig. 3: G-MS) further comprising a transmitting unit for transmitting traffic in a flow between the transceiver device (Fig. 3: G-MS) and a transmitting device (Fig. 3: BTS, BS), using the service flow identifier (SFID 50) to identify the flow (50).

2. Transceiver device (Fig. 3: G-MS) according to claim 1,
wherein the transceiver device (Fig. 3: G-MS) is constructed to only use a service flow identifier (SFID 50) for transport of traffic of the host device (Fig. 3: G_host 1, Fig 1: host 1) named in the same access serving network entity message as the service flow identifier (SFID 50).

3. Method for assigning a flow identifier (SFID 50, 51, 52, 60, 64, 67, 80), identifying a flow (50, 51, 52, 60, 64, 67, 80) between at least a transceiver device (Fig. 3: G-MS) and a host device (Fig. 3: G_host 1-3) via a wireless network (e.g. WiMAX), to a host device (Fig. 3: G_host 1-3) identification (host 1)
comprising:
- upon successful authentication of a host device (G_host 1) generating a message (Radius Access-Accept message; CoA-Request message or similar AAA messages with the same purpose like for Diameter based AAA),
the message comprising an identification of the host device (Fig. 3: G_host 1) and at least one identification (SFID 50, 51, 52, 60, 64, 67, 80) of a flow identifying traffic to be transmitted between the transceiver device (Fig. 3: G-MS) and the host device (Fig. 3: G_host 1-3) via a wired or wireless network (LAN or WLAN),
- sending the message to the transceiver device (Fig. 3: G-MS),
wherein the traffic, transmitted in a flow or in flows (50, 51, 52, 60, 64, 67, 80) between the transceiver device (Fig. 3: G-MS) and the host device (Fig. 3: G_host 1-3) via a wireless network ,
is also transmitted between the transceiver device (Fig. 3: G-MS) and a network entity (BTS; BS; ASN GW) of a telecommunication network (NAP) using the identification (SFID 50, 51, 52, 60, 64, 67, 80) of the flow or flows and/ or of the host device (Fig. 3: G_host 1-3).

4. Method according to claim 3,
wherein the message (Radius Access-Accept message; CoA-Request message or similar AAA messages with the same purpose like for Diameter based AAA) comprises a set of identifications (SFID 50, 51, 52, 60, 64, 67, 80) of respectively one flow (50, 51, 52, 60, 64, 67, 80) for the same host device (Fig. 3: G_host 1).

5. Method according to any of the claims 3-4,
wherein the message (Radius Access-Accept message; CoA-Request message or similar AAA messages with the same purpose like for Diameter based AAA) comprises a PDFID (Packet Data Flow Identifier), SDFID (Service Data Flow Identifier), Packet Flow Descriptor and QoS descriptor of a flow.

6. Method according to any of the claims 3-5,
wherein the message is a CoA- Request (Change-of-Authorization-Request) message or similar AAA message with the same purpose like for Diameter based AAA.

7. Method according to any of the claims 3-6,
wherein the message is a Radius Access-Accept message or similar AAA message with the same purpose like for Diameter based AAA.

8. Method according to any of the claims 3-7,
wherein the at least one flow is a pre-provisioned service flow.

9. Method according to any of the claims 3-8,
wherein the at least one flow is a dynamically established service flow.

10. A computer program product comprising code means adapted to produce the steps of any one of claims 3-9 when loaded into the memory of a computer.

## Patentansprüche

1. Sender-/Empfängereinrichtung (Fig. 3: G-MS),
- wobei die Sender-/Empfängereinrichtung (Fig. 3: G-MS) einen Empfänger umfasst, der bei erfolgreicher Authentifizierung einer Hosteinrichtung (G_host 1) eine Nachricht von einer Zugangsversorgungsnetzentität (Fig. 3: ASN-GW, AAAproxy) über ein drahtloses Netz (WiMAX) empfängt,
wobei die Nachricht eine Identifikation der Hosteinrichtung (Fig. 3: G_host 1) und mindestens eine Identifikation eines Flusses (SFID 50, 51, 52, 60, 64, 67, 80), die zwischen der Sender-/Empfängereinrichtung (Fig. 3: G-MS) und der Hosteinrichtung (Fig. 3: G_host 1-3) über ein verdrahtetes oder drahtloses Netz (Ethernet oder WLAN) zu übertragenden Verkehr identifiziert, umfasst,
- wobei die Sender/Empfängereinrichtung (Fig. 3: G-MS) ferner einen Speicher zum Speichern einer Identifikation einer Hosteinrichtung (Fig. 3: G_host 1) und mindestens einer Identifikation einer Dienstflusskennung (SFID 50, 51, 52, 60, 64, 67, 80), die mit der Hosteinrichtung (Fig. 3: G_host 1) auszutauschenden Verkehr identifiziert, umfasst,
- wobei die Sender-/Empfängereinrichtung (Fig. 3: G-MS) ferner eine Sendeeinheit zum Senden von Verkehr über ein verdrahtetes oder drahtloses Netz (Ethernet oder WLAN) in einem Fluss zwischen der Sender-/Empfängereinrichtung (Fig. 3: G-MS) und der Hosteinrichtung (Fig. 3: G_host 1) umfasst,
- wobei die Sender-/Empfängereinrichtung (Fig. 3: G-MS) ferner eine Sendeeinheit zum Senden von Verkehr in einem Fluss zwischen der Sender-/Empfängereinrichtung (Fig. 3: G-MS) und einer Sendeeinrichtung (Fig. 3: BTS, BS) unter Verwendung der Dienstflusskennung (SFID 50) zum Identifizieren des Flusses (50) umfasst.

2. Sender-/Empfängereinrichtung (Fig. 3: G-MS) nach Anspruch 1, wobei die Sender-/Empfängereinrichtung (Fig. 3: G-MS) dafür konstruiert ist, nur eine Dienstflusskennung (SFID 50) zum Transport von Verkehr der Hosteinrichtung (Fig. 3: G_host 1, Fig. 1: host 1) zu verwenden, die in derselben Zugangsversorgungsnetzentitsätnachricht als die Dienstflusskennung (SFID 50) benannt ist.

3. Verfahren zum Vergeben einer Flusskennung (SFID 50, 51, 52, 60, 64, 67, 80), die einen Fluss (50, 51, 52, 60, 64, 67, 80) zwischen mindestens einer Sender-/Empfängereinrichtung (Fig. 3: G-MS) und einer Hosteinrichtung (Fig. 3: G_host 1-3) über ein drahtloses Netz (z.B. WiMAX) identifiziert, an eine Identifikation (host 1) einer Hosteinrichtung (Fig. 3: G_host 1-3), umfassend:
- bei erfolgreicher Authentifizierung einer Hosteinrichtung (G_host 1), Erzeugen einer Nachricht (Nachricht Radius Access-Accept; Nachricht CoA-Request oder ähnliche AAA-Nachrichten mit demselben Zweck wie für AAA auf der Basis von Diameter),
wobei die Nachricht eine Identifikation der Hosteinrichtung (Fig. 3: G_host 1) und mindestens eine Identifikation (SFID 50, 51, 52, 60, 64, 67, 80) eines Flusses umfasst, die Verkehr identifiziert, der zwischen der Sender-/Empfängereinrichtung (Fig. 3: G-MS) und der Hosteinrichtung (Fig. 3: G_host 1-3) über ein verdrahtetes oder drahtloses Netz (LAN oder WLAN) zu übertragen ist,
- Senden der Nachricht zu der Sender-/Empfängereinrichtung (Fig. 3: G-MS),
wobei der Verkehr, der in einem Fluss oder in Flüssen (50, 51, 52, 60, 64, 67, 80) zwischen der Sender-/Empfängereinrichtung (Fig. 3: G-MS) und der Hosteinrichtung (Fig. 3: G_host 1-3) über ein drahtloses Netz übertragen wird,
auch zwischen der Sender-/Empfängereinrichtung (Fig. 3: G-MS) und einer Netzentität (BTS; BS; ASN GW) eines Telekommunikationsnetzes (NAP) unter Verwendung der Identifikation (SFID 50, 51, 52, 60, 64, 67, 80) des Flusses oder der Flüsse und/oder der Hosteinrichtung (Fig. 3: G_host 1-3) übertragen wird.

4. Verfahren nach Anspruch 3, wobei die Nachricht (Nachricht Radius Access-Accept; Nachricht CoA-Request oder ähnliche AAA-Nachrichten mit demselben Zweck wie für AAA auf der Basis von Diameter) eine Menge von Identifikationen (SFID 50, 51, 52, 60, 64, 67, 80) von jeweils einem Fluss (50, 51, 52, 60, 64, 67, 80) für dieselbe Hosteinrichtung (Fig. 3: G_host 1) umfasst.

5. Verfahren nach einem der Ansprüche 3-4,
wobei die Nachricht (Nachricht Radius Access-Accept; Nachricht CoA-Request oder ähnliche AAA-Nachrichten mit demselben Zweck wie für AAA auf der Basis von Diameter) einen PDFID (Packet Data Flow Identifier), einen SDFID (Service Data Flow Identifier), einen Packet Flow Descriptor und QoS-Descriptor eines Flusses umfasst.

6. Verfahren nach einem der Ansprüche 3-5,
wobei die Nachricht eine Nachricht CoA-Request (Changeof-Authorization-Request) oder eine ähnliche AAA-Nachricht mit demselben Zweck wie für AAA auf der Basis von Diameter ist.

7. Verfahren nach einem der Ansprüche 3-6,
wobei die Nachricht eine Nachricht Radius Access-Accept oder eine ähnliche AAA-Nachricht mit demselben Zweck wie für AAA auf der Basis von Diameter ist.

8. Verfahren nach einem der Ansprüche 3-7,
wobei der mindestens eine Fluss ein vorprovisionierter Dienstfluss ist.

9. Verfahren nach einem der Ansprüche 3-8,
wobei der mindestens eine Fluss ein dynamisch hergestellter Dienstfluss ist.

10. Computerprogrammprodukt, das Codemittel umfasst, die dafür ausgelegt sind, die Schritte nach einem der Ansprüche 3-9 zu produzieren, wenn sie in den Speicher eines Computers geladen werden.

## Revendications

1. Un dispositif émetteur-récepteur (Fig. 3 : G-MS),
- le dispositif émetteur-récepteur (Fig. 3 : G-MS) comprenant un récepteur destiné, en cas d'authentification réussie d'un dispositif hôte (G_host 1), à recevoir un message d'une entité de réseau de desserte d'accès (Fig. 3 : ASN-GW, AAAproxy) par l'intermédiaire d'un réseau sans fil (WiMax),
le message comprenant une identification du dispositif hôte (Fig. 3 : G_host 1) et au moins une identification d'un flux (SFID 50, 51, 52, 60, 64, 67, 80) identifiant du trafic à transmettre entre le dispositif émetteur-récepteur (Fig. 3 : G-MS) et le dispositif hôte (Fig. 3 : G_host 1-3) par l'intermédiaire d'un réseau sans fil ou filaire (Ethernet ou WLAN),
- le dispositif émetteur-récepteur (Fig. 3 : G-MS) comprenant en outre une mémoire destinée à conserver en mémoire une identification d'un dispositif hôte (Fig. 3 : G_host 1) et au moins une identification d'un identifiant de flux de service (SFID 50, 51, 52, 60, 64, 67, 80) identifiant du trafic à échanger avec le dispositif hôte (Fig. 3 : G_host 1),
- le dispositif émetteur-récepteur (Fig. 3 : G-MS) comprenant en outre une unité de transmission destinée à transmettre, par l'intermédiaire d'un réseau sans fil ou filaire (Ethernet ou WLAN), du trafic dans un flux entre le dispositif émetteur-récepteur (Fig. 3 : G-MS) et le dispositif hôte (Fig. 3 : G_host 1),
- le dispositif émetteur-récepteur (Fig. 3 : G-MS) comprenant en outre une unité de transmission destinée à transmettre du trafic dans un flux entre le dispositif émetteur-récepteur (Fig. 3 : G-MS) et un dispositif de transmission (Fig. 3 : BTS, BS) au moyen de l'identifiant de flux de service (SFID 50) de façon à identifier le flux (50).

2. Un dispositif émetteur-récepteur (Fig. 3 : G-MS) selon la revendication 1, dans lequel le dispositif émetteur-récepteur (Fig. 3 : G-MS) est construit de façon à utiliser uniquement un identifiant de flux de service (SFID 50) pour le transport de trafic du dispositif hôte (Fig. 3 : G_host 1, Fig. 1 : host 1) indiqué dans le même message d'entité de réseau de desserte d'accès que l'identifiant de flux de service (SFID 50).

3. Un procédé d'attribution d'un identifiant de flux (SFID 50, 51, 52, 60, 64, 67, 80) identifiant un flux (50, 51, 52, 60, 64, 67, 80) entre au moins un dispositif émetteur-récepteur (Fig. 3 : G-MS) et un dispositif hôte (Fig. 3 : G_host 1-3) par l'intermédiaire d'un réseau sans fil (par exemple WiMAX), à une identification (host 1) de dispositif hôte (Fig. 3 : G_host 1-3)
comprenant :
- en cas d'authentification réussie d'un dispositif hôte (G_host 1), la génération d'un message (message d'acceptation d'accès Radius, message de demande de CoA ou messages AAA similaires avec le même objectif que pour AAA de type Diameter),
le message comprenant une identification du dispositif hôte (Fig. 3 : G_host 1) et au moins une identification (SFID 50, 51, 52, 60, 64, 67, 80) d'un flux identifiant du trafic à transmettre entre le dispositif émetteur-récepteur (Fig. 3 : G-MS) et le dispositif hôte (Fig. 3 : G_host 1-3) par l'intermédiaire d'un réseau sans fil ou filaire (LAN ou WLAN),
- l'envoi du message au dispositif émetteur-récepteur (Fig. 3 : G-MS),
dans lequel le trafic, transmis dans un flux ou dans des flux (50, 51, 52, 60, 64, 67, 80) entre le dispositif émetteur-récepteur (Fig. 3 : G-MS) et le dispositif hôte (Fig. 3 : G_host 1-3) par l'intermédiaire d'un réseau sans fil
est également transmis entre le dispositif émetteur-récepteur (Fig. 3 : G-MS) et une entité de réseau (BTS, BS, ASN GW) d'un réseau de télécommunication (NAP) au moyen de l'identification (SFID 50, 51, 52, 60, 64, 67, 80) du flux ou des flux et/ou du dispositif hôte (Fig. 3 : G_host 1-3).

4. Un procédé selon la revendication 3,
dans lequel le message (message d'acceptation d'accès Radius, message de demande de CoA ou messages AAA similaires avec le même objectif que pour AAA de type Diameter) comprend un ensemble d'identifications (SFID 50, 51, 52, 60, 64, 67, 80) de respectivement un flux (50, 51, 52, 60, 64, 67, 80) pour le même dispositif hôte (Fig. 3 : G_host 1).

5. Un procédé selon l'une quelconque des revendications 3 ou 4,
dans lequel le message (message d'acceptation d'accès Radius, message de demande de CoA ou messages AAA similaires avec le même objectif que pour AAA de type Diameter) comprend un PDFID (identifiant de flux de données par paquet), un SDFID (identification de flux de données de service), un descripteur de flux de paquets et un descripteur de qualité de service (QoS) d'un flux.

6. Un procédé selon l'une quelconque des revendications 3 à 5,
dans lequel le message est un message de demande de CoA (demande de modification d'autorisation) ou un message AAA similaire avec le même objectif que pour AAA de type Diameter.

7. Un procédé selon l'une quelconque des revendications 3 à 6,
dans lequel le message est un message d'acceptation d'accès Radius ou un message AAA similaire avec le même objectif que pour AAA de type Diameter.

8. Un procédé selon l'une quelconque des revendications 3 à 7,
dans lequel le au moins un flux est un flux de service pré-approvisionné.

9. Un procédé selon l'une quelconque des revendications 3 à 8,
dans lequel le au moins un flux est un flux de service établi dynamiquement.

10. Un programme informatique contenant un moyen de code adapté de façon à produire les opérations selon l'une quelconque des revendications 3 à 9 lorsqu'il est chargé dans la mémoire d'un ordinateur.
